# EUROPEAN PATENT APPLICATION

(11) **EP 1 582 975 A1**
(43) Date of publication of application: **05.10.2005**
(21) Application number: 04076030.8
(22) Date of filing: 31.03.2004
(51) Int. Cl.: G06F 9/44

(54) **Configuration based user interface generation**

(71) Applicant: SAP AG, 69190 Walldorf (DE)
(72) Inventor: The designation of the inventor has not yet been filed
(74) Representative: Winckels, Johannes Hubertus F.

(57) **Abstract**

A method for generating a user interface to a computer system, comprising: providing a generating tool for generating a user interface to a computer system using metadata of a predetermined format; and programming said generating tool to dynamically create said metadata of said predetermined format. Preferably, said metadata of said predetermined format are provided in the form of semi configured screens, defining user interface container elements that are configurable by said dynamically created metadata so as to define the form/location and/or context.

## Description

The invention relates to a method for generating a user interface in a computer system. The invention further relates to a computer system and a client system. The invention also relates to a computer program product and an article of manufacture.

Today's end users are accustomed to the Internet's intuitive point-and-click technology. Yet in contrast to many professional business applications, Internet browsers often lack input checks, input help, support for multiple languages, and easy-to-use error handling - shortcomings that are simply not acceptable for state-of-the-art Web applications.

To implement the required functionality, software development companies have developed software that is able to provide a designtime environment that is independent of the underlying runtime environment and enables companies to model and design user interfaces cost-effectively and precisely. One of such companies is SAP AG which has launched WebDynpro as a powerful tool to create user interfaces that are fully in compliance with the above identified requirements to usability and user friendliness.

However, in the process of developing and implementing a business tool, it has been found that the conventional approach of designing, developing and implementing a user interface has shortcomings, since it poses a quite rigid context on the side of the end-user. An application developer knows the business case of his/her application and knows what sections of the application need to appear in the user interface. He/she can plan on where to display which source of data. In this respect the so called pattern based UI has become popular. Such pattern based Uis are predefined UI layouts available centrally, which can be configured for use in several applications. The advantage for application developers is zero programming and the disadvantage and sometimes even danger is the need to be restricted to what the pattern provides sometimes causing a loss of flexibility and sometimes also a loss of functionality.

Indeed, once implemented in a company, one should have the flexibility to decide on which data should be displayed, so as to be able to customize or adapt some of the user interfaces for the business, in order to better meet needs and rid superfluous elements that appear to be unnecessary to present to a user.

The invention has as one of its objects to provide an environment, wherein, at implementation time, a consultant or end user may be able to realize a layout change of the user interface. As another object, the invention aims to provide a software tool that is able to provide the required usability and flexibility for modifying a user interface after implementing the business program in a business.

To this end, the invention provides a method according to the features of claim 1. By soft-coding the data to be displayed, in implementation time at customer site- the customer can configure the fields to be displayed and at runtime this information is mapped to the containers in the user interface and the user interface is generated. This approach provides highly configurable software with good user experience.

Furthermore, the invention provides a computer system according to claim 8. The invention also provides a computer program product according to claim 11, and an article of manufacture according to claim 12.

Specific embodiments of the invention are set forth in the dependent claims. Further details, aspects and embodiments of the invention will be described, by way of example only, with reference to the attached drawings.
In Figure 1 the steps of generating a user interface to a computer system are illustrating according to the inventive method;
In Figure 2 a semi configured screen is shown comprising configurable controls according to the inventive method;
In Figure 3 is illustrated how the semi configured screen is fully configured using the inventive method; and
In Figure 4 the resultant user interface is illustrated.

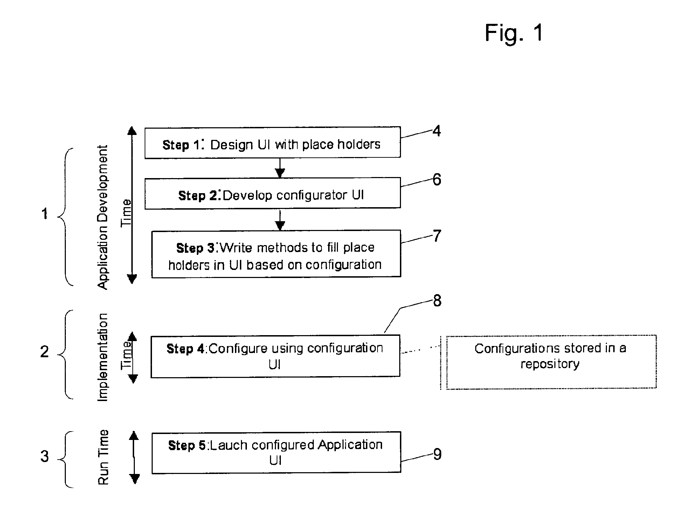

The steps illustrated in Figure 1 are divided at application development steps 1; implementation steps 2 and runtime steps 3, to discriminate between the various phases of the installation of a business software program in a company.

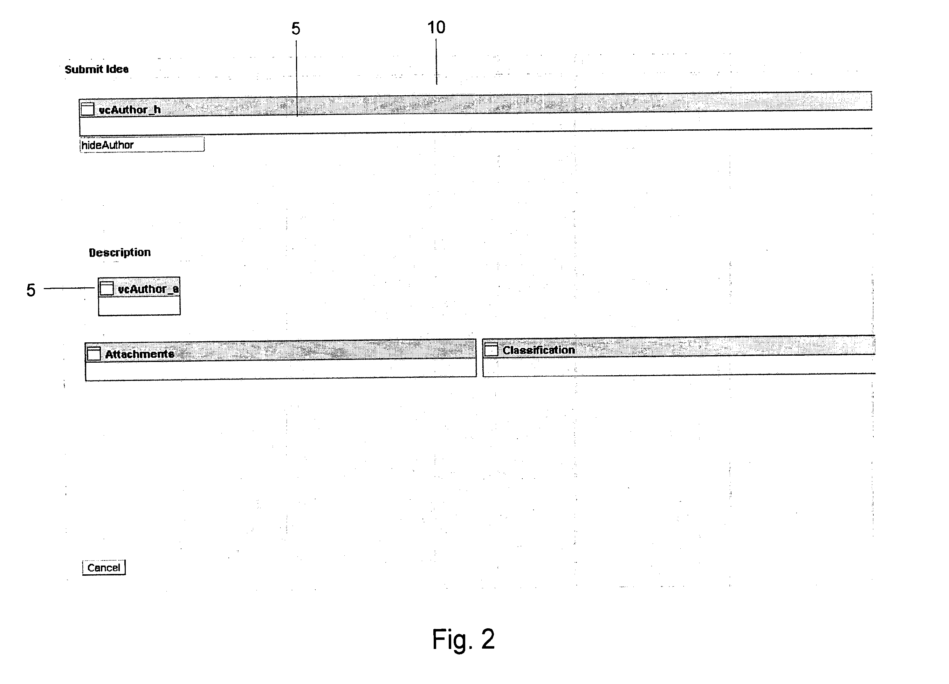

In application development time, conventionally, the most flexibility is offered for configuring the user interface. However, in order to be able to provide at implementation time a same amount of flexibility, it is proposed to provide a method for generating a user interface to a computer system, comprising: providing a generating tool for generating a user interface to a computer system using metadata of a predetermined format; and programming said generating tool to dynamically create said metadata of said predetermined format. To this end, in application development time, as will be shown with reference to Figure 2, the semi configured screen for generating a user interface are not hard coded, but comprise elements that are dynamically configurable. Hence, as a first step 4 a semi configured screen is designed for the user interface with so-called containers 5. These elements 5 (see Figure 2) are indicative of a certain graphical function, without providing the specific details for form/location and/or context for a plurality of user interface control elements. These details can be filled in later, in implementation time 2, so that the user interface control elements are configured by said dynamically created metadata so as to define the form/location and/or context of said interface control elements.

Another step 6 in application development time 1 is the development of a configurator user interface tool for generating a user interface to a computer system using metadata of a predetermined format. Also in application development time, methods are defined in another step 7 to be able to fill the containers in the user interface using said dynamically created metadata.

When steps 4, 6 and 7 are performed, the application is prepared for the interface to be configured in implementation step 8. At this time, the software is fully developed and no programming is necessary. However, a consultant or end user whishing to modify or adapt some elements in the user interface is able to realize this and thereby dynamically create said metadata of said predetermined format using the methods created in application development step 7. Finally, in step 9, the application is ready to be launched, to display the specially configured interface.

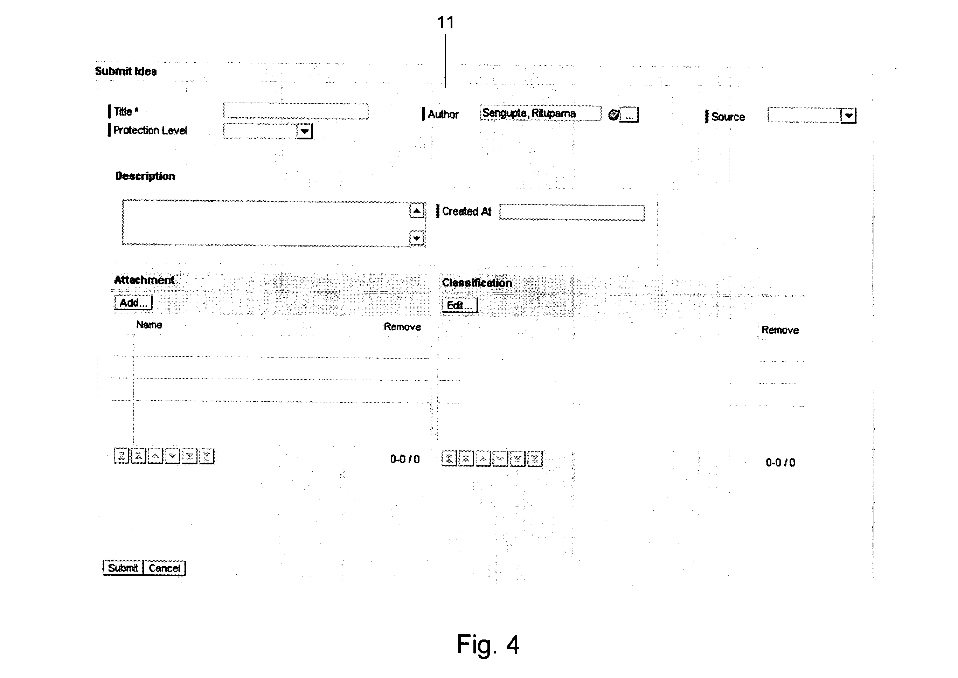

Figure 2 shows an example of a semi configured screen 10 that is filled with containers 5 in application development time 1. The development platform for this case is Web Dynpro. For every application user interface, at design time the user interface is designed with containers to be filled in with configuration data. The semi configured screen 10 is generating the "Submit Idea user interface" 11 illustrated in Figure 4 and may be used to submit an idea of a user in a business software application. Since this user interface is only defined in terms of containers, the consultant has the possibility to configure the "submit idea" semi configured screen 10 in implementation time.

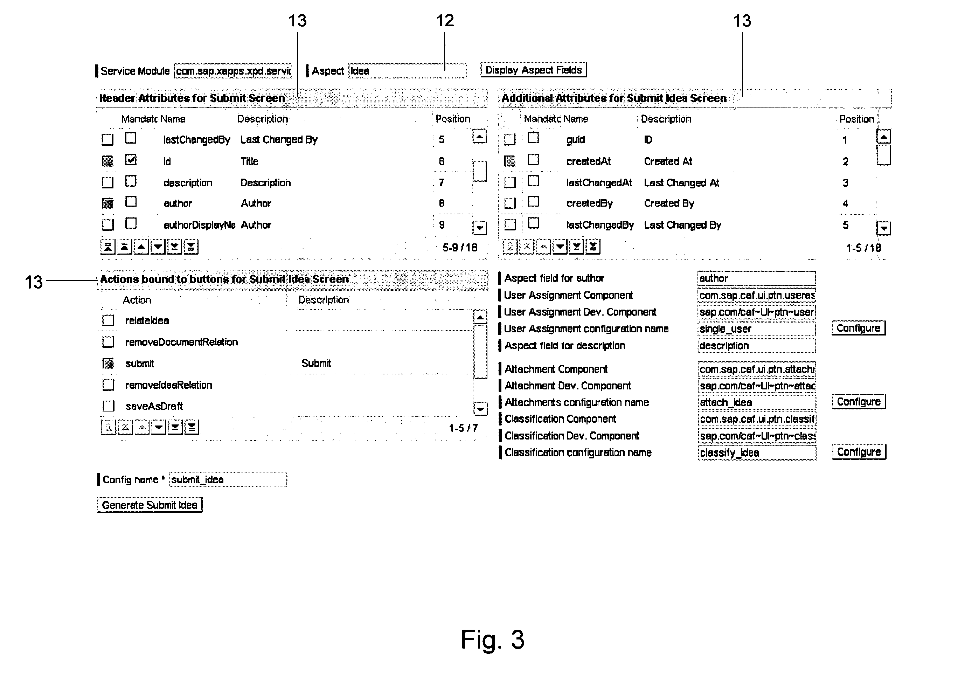

Figure 3 illustrates how a consultant launches a configuration screen 12 and configures the attributes to be displayed 13- for example which attributes should be available in the header and what buttons should be available. This is by using the "doModify Method" to dynamically create user interface elements based on the configuration where the attributes of an object are exposed for selection. If all the containers are defined using the screen 11, the user interface is fully defined. In the application launch step 9, the interface is displayed, for instance on client system that is communicatively connected a server-system arranged for running the generating software for generating the user interface using the input from screen 11. As is illustrated in Figure 1, the screens 11 may be in a repository to be retrieved while configuring the user interface.

The computational aspects described here can be implemented in digital electronic circuitry, or in computer hardware, firmware, software, or in combinations of them. Where appropriate, aspects of these systems and techniques can be implemented in a computer program product tangibly embodied in a machine-readable storage device for execution by a programmable processor, and method steps can be performed by a programmable processor executing a program of instructions to perform functions by operating on input data and generating output.

The invention may also be implemented in an article of manufacture with a computer usable medium having computer readable instructions embodied therein for providing access to resources available on that computer, the computer readable instructions comprising instructions to cause the computer to perform a part of a method according to the invention. The invention may also be implemented as a computer program for running on a computer system, at least including code portions for performing steps of a method according to the invention when run on a computer system or enabling a general propose computer system to perform functions of a filter device according to the invention. Such a computer program may be provided on a data carrier, such as a CD-ROM or diskette, stored with data loadable in a memory of a computer system, the data representing the computer program. The data carrier may further include a data connection, such as a telephone cable or a wireless connection transmitting signals representing a computer program according to the invention.

It should be noted that the above-mentioned embodiments illustrate rather than limit the invention, and that those skilled in the art will be able to design alternatives without departing from the scope of the appended claims.

In the claims, any reference signs placed between parentheses shall not be construed as limiting the claim. The word 'comprising' does not exclude the presence of other elements or steps than those listed in a claim. The word 'a' is used as an equivalent of 'one or more' or 'at least one'.

## Claims

1. A method for generating a user interface to a computer system, comprising:
- providing a generating tool for generating a user interface to a computer system using metadata of a predetermined format;
- programming said generating tool to dynamically create said metadata of said predetermined format.

2. A method according to claim 1, wherein said metadata of said predetermined format are provided in the form of semiconfigured screens, defining user interface container elements that are configurable by said dynamically created metadata so as to define the form/location and/or context of said user interface container elements.

3. A method according to claim 1, wherein said generating tool is programmed by free style programming.

4. A method according to claim 1, wherein said generating tool is programmed using predetermined templates for instructing said generating tool to dynamically create said metadata.

5. A method according to claim 1, wherein said templates provide information as to form/location and/or context for a plurality of user interface control elements in a user interface to be generated by said generating tool.

6. A method according to claim 4 or 5, wherein said templates are stored in a repository to be retrieved while configuring the user interface.

7. A method according to claim 6, wherein said templates are accessible and configurable by an end-user or consultant.

8. A computer system, comprising:
- a processor device;
- a generating tool configured to run on said processor device for generating a user interface to said computer system;
- a repository comprising metadata of a predetermined format to be used by said generating tool; and
- a configuration tool for dynamically creating said metadata of said predetermined format to be used by said generating tool.

9. A computer system according to claim 8, comprisinng a client-system at which the user-interface is present and at least one server-system communicatively connected to ssaid client-system, which server-system is arranged for running at least said generating tool.

10. A computer system according to claim 10, wherein said client-system is adapted to run said configuration tool.

11. A computer program product, comprosing program code portions for performing steps of a method as claimed in any one of claims 1-7, when run on a programmable apparatus.

12. An article of manufacture with a computer usable medium having computer readable instructions therein for providing access to resources available on that computer, the computer readable instructions comprising to cause the computer to perform the steps of a method as claimed in any one of claims 1-7.
